# EUROPÄISCHE PATENTANMELDUNG

(11) **EP 2 924 789 A1**
(43) Veröffentlichungstag der Anmeldung: **30.09.2015**
(21) Anmeldenummer: 15160013.7
(22) Anmeldetag: 20.03.2015
(51) Int. Cl.: H01M 8/04

(54) **Brennstoffzellensystem mit einem Elektrodenabgasrezirkulationskreis, sowie ein Verfahren zum Starten eines Brennstoffzellensystems**

(30) Priorität: 24.03.2014 DE 102014205421
(71) Anmelder: ROBERT BOSCH GMBH, 70442 Stuttgart (DE)
(72) Erfinder: Haag, Florian, 74199 Untergruppenbach (DE); Carre, Maxime, 70469 Stuttgart (DE)

(57) **Zusammenfassung**

Die Erfindung betrifft ein Brennstoffzellensystem, insbesondere SOFC-Brennstoffzellensystem, aufweisend eine Brennstoffzelle, einen Elektrodenabgasrezirkulationskreis und einen Abgastrakt, wobei der Elektrodenabgasrezirkulationskreis mit dem Abgastrakt verbunden ist, dadurch gekennzeichnet, dass ein Stoffstrom aus dem Abgastrakt in den Elektrodenabgasrezirkulationskreis vermeidbar ist. Ferner Betrifft die Erfindung ein Verfahren zum Starten eines Brennstoffzellensystems.

## Beschreibung

Die Erfindung betrifft ein Brennstoffzellensystem, insbesondere SOFC-Brennstoffzellensystem, aufweisend eine Brennstoffzelle, einen Elektrodenabgasrezirkulationskreis und einen Abgastrakt, wobei der Elektrodenabgasrezirkulationskreis mit dem Abgastrakt verbunden ist. Ferner betrifft die Erfindung ein Verfahren zum Starten eines Brennstoffzellensystems.

### Stand der Technik

Die WO 2010/004091 A1 offenbart ein Brennstoffzellensystem mit einem Anodenabgasrezirkulationskreis, wobei über eine Abgasleitung ein Teil des Abgases abgeführt wird.

### Offenbarung der Erfindung

Das erfindungsgemäße Brennstoffzellensystem hat demgegenüber den Vorteil, dass ein Stoffstrom aus dem Abgastrakt in den Elektrodenabgasrezirkulationskreis vermeidbar ist. So wird beispielsweise verhindert, dass bei einem Unterdruck im Elektrodenabgasrezirkulationskreis unerwünschte Stoffe aus dem Abgastrakt angesaugt werden.

Durch die in den Unteransprüchen aufgeführten Merkmale sind vorteilhafte Weiterbildungen des erfindungsgemäßen Brennstoffzellensystems möglich. So kann es sein, dass der Elektrodenabgasrezirkulationskreis ein Anodenabgasrezirkulationskreis ist, wobei insbesondere ein im Elektrodenabgasrezirkulationskreis befindlicher Stoff zumindest teilweise in den Abgastrakt führbar ist. Insbesondere ist das Anodenabgas zumindest teilweise über zumindest einen Teil des Elektrodenabgasrezirkulationskreises in den Abgastrakt führbar. Dabei ist es von Vorteil, dass erfindungsgemäß ein Stoffstrom von im Abgastrakt befindlichen Soffen, wie z.B. Sauerstoff oder Kohlenstoffmonoxid, in den Anodenabgasrezirkulationskreis vermieden ist.

In einer vorteilhaften Ausführungsform des erfindungsgemäßen Brennstoffzellensystems ist der Stoffstrom aus dem Abgastrakt in den Elektrodenabgasrezirkulationskreis durch eine Rückflussverhinderungseinrichtung vermeidbar. Diese lässt sich relativ einfach einbauen und erlaubt es somit, bestehende Brennstoffzellensysteme auf technisch einfache Weise zu erweitern.

Vorzugsweise ist die Rückflussverhinderungseinrichtung den Elektrodenabgasrezirkulationskreis und den Abgastrakt verbindend, insbesondere zwischen mindestens zwei Leitungen, angeordnet. Dabei kann sie beispielsweise flanschartig angeordnet sein, was ein leichtes Auswechseln bei Wartungsarbeiten ermöglicht.

In einer bevorzugten Ausführung des erfindungsgemäßen Brennstoffzellensystems ist die Rückflussverhinderungseinrichtung ein Rückschlagventil. Dies gewährleistet eine kostengünstige Umsetzung der erfindungsgemäßen Vorrichtung.

In einer weiteren vorteilhaften Ausführungsform des erfindungsgemäßen Brennstoffzellensystems ist dem Elektrodenabgasrezirkulationskreis ein Sicherheitsstoff, beispielsweise Sticksoff, zuführbar. Dadurch können die im Brennstoffzellensystem enthaltenen unerwünschten Stoffe, wie z.B. Sauerstoff und Kohlenstoffmonoxid, aus dem Elektrodenabgasrezirkulationskreis in den Abgastrakt verdrängt werden. Somit kann mit Hilfe eines Sicherheitsstoffs eine Oxidation der, insbesondere nickelhaltigen, Elektrode mit sauerstoffhaltigen Stoffen vermieden werden. Vorzugsweise handelt es sich bei dem Sicherheitsstoff um einen inerten Stoff, wie z.B. Stickstoff.

In einer vorteilhaften Ausführungsform ist der Sicherheitsstoff, durch eine Zusatzvorrichtung, insbesondere stromaufwärts der Brennstoffzelle und/oder stromaufwärts eines Reformers, zuführbar. So kann eine Zuführung eines Sicherheitsstoffes durch eine technisch einfache Erweiterung des Brennstoffzellensystems ermöglicht werden. Zudem wird ermöglicht, dass der Sicherheitsstoff optional zuführbar ist.

In einer weiteren vorteilhaften Ausführungsform des erfindungsgemäßen Brennstoffzellensystems ist eine Erwärmungseinrichtung in- und/oder am Elektrodenabgasrezirkulationskreis, insbesondere stromaufwärts der Brennstoffzelle und/oder stromabwärts eines Reformers, angeordnet. So wird ein Erwärmen der im Elektrodenabgasrezirkulationskreis befindlichen Stoffe während eines Startvorgangs ermöglicht.

Die Erfindung betrifft auch ein Verfahren zum Starten eines Brennstoffzellensystems, insbesondere eines Brennstoffzellensystems aus der vorhergehenden Beschreibung, aufweisend eine Brennstoffzelle, einen Elektrodenabgasrezirkulationskreis und einen Abgastrakt, wobei der Elektrodenabgasrezirkulationskreis mit dem Abgastrakt verbunden ist. Dabei wird ein Stoffstrom aus dem Abgastrakt in den Elektrodenabgasrezirkulationskreis vermieden, wodurch beispielsweise verhindert wird, dass bei einem Unterdruck im Elektrodenabgasrezirkulationskreis, insbesondere während eines Startvorgangs, unerwünschte Stoffe aus dem Abgastrakt angesaugt werden.

Es ist von Vorteil, wenn der Stoffstrom aus dem Abgastrakt in den Elektrodenabgasrezirkulationskreis durch eine Rückflussverhinderungseinrichtung vermieden wird. So kann ein bestehendes Brennstoffzellensystem durch den Einbau einer Rückflussverhinderungseinrichtung auf einfache Weise erweitert werden.

Besonders während eines Startvorgangs eines Brennstoffzellensystems ist es vorteilhaft, wenn dem Elektrodenabgasrezirkulationskreis ein Sicherheitsstoff, beispielsweise Stickstoff, zugeführt wird. So werden unerwünschten Stoffe, wie z.B. Sauerstoff oder Kohlenstoffmonoxid, aus dem Elektrodenabgasrezirkulationskreis verdrängt. Somit können sich keine schädlichen und/oder giftigen Stoffe, wie z.B. Nickeloxid und/oder Nickeltetracarbonyl, durch Oxidation der nickelhaltigen Komponenten innerhalb der Brennstoffzelleneinheit bilden.

Vorzugsweise wird der Sicherheitsstoff zugeführt, während dem Brennstoffzellensystem kein Brennstoff zugeführt wird. So können Stoffe, wie z.B. Kohlenstoffmonoxid, welche während eines Startvorgangs unerwünscht sind, aus dem Elektrodenabgasrezirkulationskreis verdrängt werden, ohne dass sie durch Reformierung und/oder elektrochemische Umsetzung von Brennstoff während des Startvorgangs wiederholt entstehen.

Besonders während eines Startvorgangs ist es von Vorteil, wenn der Sicherheitsstoff nur ein einziges Mal oder nur wenige Male zugeführt wird. So kann der Verbrauch von Sicherheitsstoff reduziert werden.

Vorzugsweise wird der Sicherheitsstoff bei einer Temperatur unterhalb von 200 °C, insbesondere bei Raumtemperatur, zugeführt. Dadurch kann verhindert werden, dass sich während eines Startvorgangs unterhalb einer Temperatur von 200 °C unerwünschte Stoffe, wie z.B. Nickeloxid und/oder Nickeltetracarbonyl, bilden.

Des Weiteren ist es von Vorteil, wenn für ein Startvorgang des erfindungsgemäßen zumindest ein im Elektrodenabgasrezirkulationskreis befindlicher Stoff durch eine in- und/oder am Elektrodenabgasrezirkulationskreis, insbesondere zwischen einem Reformer und der Brennstoffzelle, angeordnete Erwärmungseinrichtung erwärmt wird. Durch die Zirkulation der im Elektrodenabgasrezirkulationskreis befindlichen Stoffe kann somit eine gleichmäßige und effiziente Aufheizung des erfindungsgemäßen Brennstoffzellensystems erfolgen.

### Zeichnungen

In den Zeichnungen sind Ausführungsbeispiele des erfindungsgemäßen Brennstoffzellensystems schematisch dargestellt und in der nachfolgenden Beschreibung näher erklärt. Es zeigen
- Fig. 1: eine schematische Darstellung einer Ausführungsform des erfindungsgemäßen Brennstoffzellensystems;
- Fig. 2: eine schematische Darstellung eines Querschnitts einer Rückflussverhinderungseinrichtung;
- Fig. 3: eine schematische Darstellung einer weiteren Ausführungsform des erfindungsgemäßen Brennstoffzellensystems;

### Beschreibung

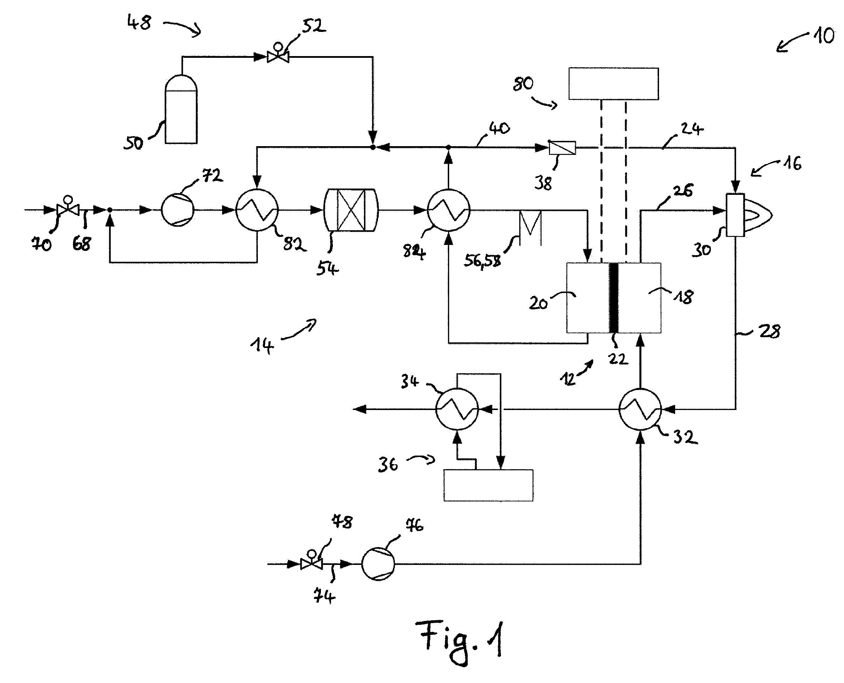

Fig. 1 zeigt eine schematische Darstellung einer Ausführungsform des erfindungsgemäßen Brennstoffzellensystems 10. Das Brennstoffzellensystem 10, insbesondere SOFC-Brennstoffzellensystem, weist eine Brennstoffzelle 12, einen Elektrodenabgasrezirkulationskreis 14 und einen Abgastrakt 16 auf, wobei der Elektrodenabgasrezirkulationskreis 14 mit dem Abgastrakt 16 verbunden ist. Erfindungsgemäß ist dabei ein Stoffstrom aus dem Abgastrakt 16 in den Elektrodenabgasrezirkulationskreis 14 vermeidbar.

Die Brennstoffzelle 12 weist zwei Elektroden auf, eine Kathode 18 und eine Anode 20, und einen zwischen den Elektroden angeordneten Elektrolyten 22. So ist der gezeigte Elektrodenabgasrezirkulationskreis 14 ein Anodenabgasrezirkulationskreis 14. Dabei ist ein im Elektrodenabgasrezirkulationskreis 14 befindlicher Stoff zumindest teilweise in den Abgastrakt 16 führbar.

Der Abgastrakt besteht im Wesentlichen aus drei Leitungen 24, 26, 28 und einem Nachbrenner 30. Durch die erste Abgasleitung 24 sind Stoffe, wie kohlenstoffmonoxidhaltiges Anodenabgas, aus dem Elektrodenabgasrezirkulationskreis 14 zum Nachbrenner 30 führbar, während durch die zweite Abgasleitung 26 das im Wesentlichen sauerstoffhaltige Kathodenabgas zum Nachbrenner 30 führbar ist. Somit werden im Nachbrenner 30 die kohlenstoffmonoxidhaltigen Anodenabgase durch Beimischung des sauerstoffhaltigen Kathodenabgases verbrannt. Das verbrannte Abgasprodukt wird in den Wärmetauschern 32, 34 abgekühlt und verlässt das Brennstoffzellensystem im weiteren Verlauf über die dritte Abgasleitung 28. Dabei wird die Wärme durch die Wärmetauscher 32, 34 auf einen der Kathode zugeführten Stoff und auf einen Heizkreislauf 36 übertragen.

Durch eine Rückflussverhinderungsvorrichtung 38 ist ein Stoffstrom aus dem Abgastrakt in den Elektrodenabgasrezirkulationskreis 14 vermieden. So wird verhindert, dass Stoffe, wie z.B. Sauerstoff oder Kohlenwasserstoff, aus dem Abgastrakt in den Elektrodenabgasrezirkulationskreis 14 gelangen, wo sich sonst an der nickelhaltigen Anode 20 durch Oxidation schädliche und/oder giftige Stoffe, wie z.B. Nickeloxid und/oder Nickeltetracarbonyl, bilden könnten.

Die Rückflussverhinderungseinrichtung 38 ist so angeordnet, dass sie den Elektrodenabgasrezirkulationskreis 14 und den Abgastrakt 16 zwischen mindestens zwei Leitungen 24, 40 verbindet. Die Leitung 40 stellt damit eine Verbindungsleitung 40 dar, welche den Elektrodenabgasrezirkulationskreis 14 mit dem Abgastrakt 16 verbindet.

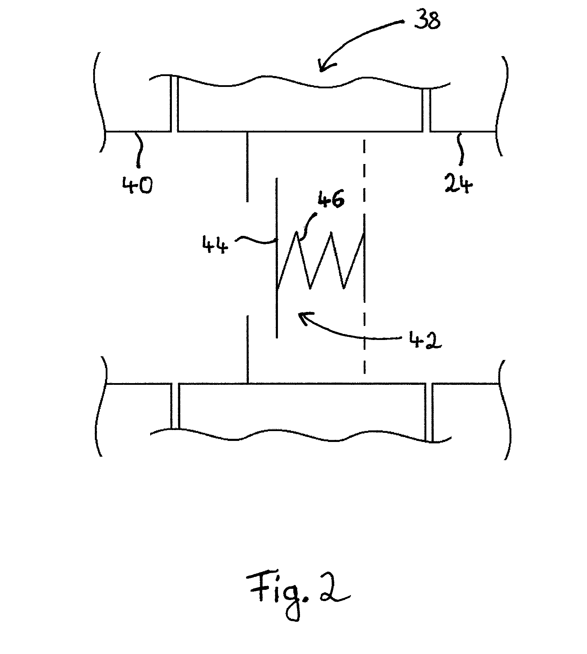

Die Fig. 2 zeigt eine schematische Darstellung eines Querschnitts einer Rückflussverhinderungseinrichtung 38. Die Rückflussverhinderungseinrichtung 38 stellt dabei ein Rückschlagventil 38 dar, welches als Verbindungsstück zwischen den Leitungen 24, 40, beispielsweise flanschartig, angeordnet und/oder angeschweißt werden kann.

Das Rückschlagventil 38 weist eine zentrisch angeordnete Rückschlageinrichtung 42 auf, wobei die zentrisch angeordnete Rückschlageinrichtung 42 eine Rückschlagklappe 44 und ein Rückstellelement 46, beispielsweise eine Feder, umfasst. Eine zentrisch angeordnete Rückschlageinrichtung 42 ermöglicht ein besonders effizientes Schließen und/oder Öffnen des Rückschlagventils 38, entsprechend des Druckverhaltens einer Strömung. Ist der Druck innerhalb der Verbindungsleitung 40 größer als in der ersten Abgasleitung 24, so ist das Rückschlagventil 38 geöffnet und ein Stoff kann von der Verbindungsleitung 40 in die erste Abgasleitung 24 strömen. Ist hingegen der Druck in der ersten Abgasleitung 24 größer als in der Verbindungsleitung 40, so schließt sich das Rückschlagventil 38, wodurch ein Stoffstrom aus dem Abgastrakt 16 in den Elektrodenabgasrezirkulationskreis 14 verhindert wird.

Ferner ist in Fig. 1 gezeigt, dass dem Elektrodenabgasrezirkulationskreis 14 ein Sicherheitsstoff zuführbar ist. Durch die Zuführung eines Sicherheitsstoffes wird die Sicherheit des Systems erhöht, indem unerwünschte Stoffe, wie Sauerstoff oder Kohlenstoffmonoxid, aus dem Elektrodenabgasrezirkulationskreis 14 verdrängt werden. Unter einem Sicherheitsstoff ist dabei ein inerter Stoff zu verstehen, welcher sehr reaktionsträge ist. Zu inerten Stoffen gehören beispielsweise Stickstoff und sämtliche Edelgase.

Alternativ kann der Sicherheitsstoff beispielsweise eine Mischung aus Argon und/oder Stickstoff und/oder Wasserstoff sein.

Der Sicherheitsstoff ist durch eine Zusatzvorrichtung 48 zuführbar. So ist das Sicherheitsgas optional zuführbar. Die Zusatzvorrichtung 48 weist einen den Sicherheitsstoff enthaltenden Behälter 50, beispielsweise eine Gasflasche, auf.

Des Weiteren weist die Zusatzvorrichtung 48 weine Dosiereinheit 52, beispielsweise eine Ventil, zur Dosierung des zugeführten Sicherheitsstoffes auf.

Der Sicherheitsstoff ist dem Elektrodenabgasrezirkulationskreis 14 stromaufwärts der Brennstoffzelle 12 und stromaufwärts eines Reformers 54 zuführbar.

Das Ausführungsbeispiel zeigt darüber hinaus eine Erwärmungseinrichtung 56, welche in- und/oder am Elektrodenabgasrezirkulationskreis 14 angeordnet sein kann. Sie ist stromaufwärts der Brennstoffzelle 12 und stromabwärts des Reformers 54 angeordnet. Vorzugsweise ist die Erwärmungseinrichtung 56 eine elektrische Erwärmungseinrichtung. Bei der elektrischen Erwärmungseinrichtung handelt es sich beispielsweise um einen Heizdraht 58.

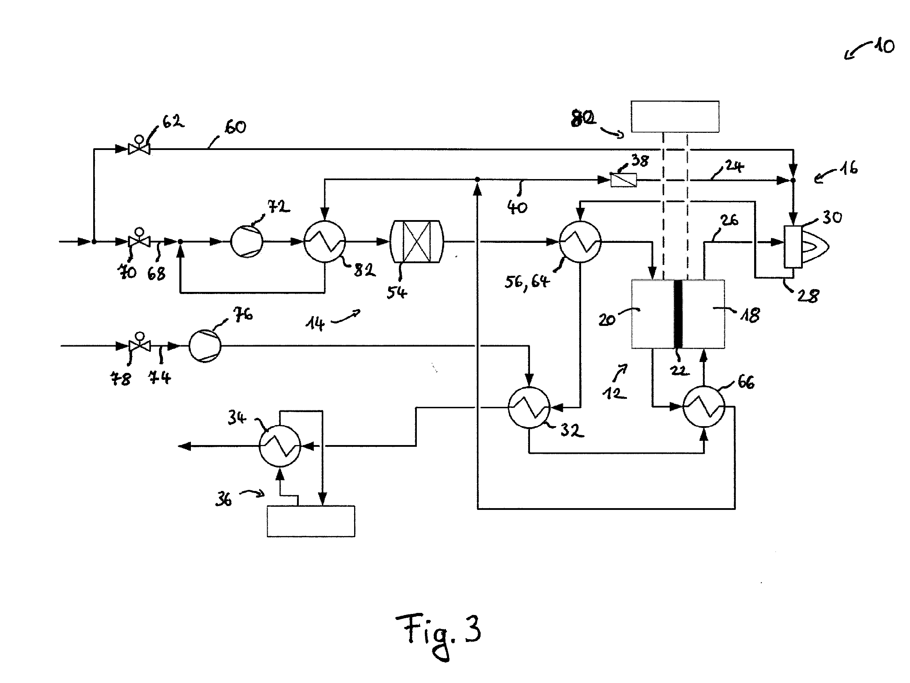

In Fig. 3 ist eine schematische Darstellung einer weiteren Ausführungsform des erfindungsgemäßen Brennstoffzellensystems 10 gezeigt. Im Gegensatz zu der in Fig. 1 gezeigten Ausführungsform ist eine zusätzliche Brennstoffleitung 60 angeordnet, über welche der Nachbrenner 30 direkt mit Brennstoff versorgt werden kann. Die Dosierung des dem Nachbrenner 30 zugeführten Brennstoffs erfolgt über ein zusätzliches Brennstoffventil 62.

Die dritte Leitung 28 ist so angeordnet, dass durch einen zusätzlichen Wärmetauscher 64 die Wärme des aus dem Nachbrenner 30 kommenden Abgasproduktes auf die in dem Elektrodenabgasrezirkulationskreis 14 befindlichen Stoffe übertragen werden kann. Auf diese Weise kann die im Nachbrenner 30 erzeugte Wärme für einen Startvorgang effektiv genutzt werden. So fungiert der zusätzliche Wärmetauscher 64 in dem in Fig. 3 gezeigten Ausführungsbeispiel als Erwärmungseinrichtung 56, weshalb von der Verwendung eines Heizdrahts 58 abgesehen werden kann.

Ferner ist der in Fig. 3 gezeigte Elektrodenabgasrezirkulationskreis 14 so ausgeführt, dass über einen weiteren Wärmetauscher 66 der Stoff, welcher der Kathode 18 zugeführt wird, durch das Abgas der Anode 20 vorgewärmt wird. So kann die im Brennstoffzellensystem vorhandene Wärme effizient genutzt werden.

Bei dem erfindungsgemäßen Verfahren zum Starten eines Brennstoffzellensystems, insbesondere eines Brennstoffzellensystem 10 wie es in den Figuren schematisch dargestellt ist, aufweisend eine Brennstoffzelle 12, einen Elektrodenabgasrezirkulationskreis 14 und einen Abgastrakt 16, wobei der Elektrodenabgasrezirkulationskreis 14 mit dem Abgastrakt 16 verbunden ist, wird ein Stoffstrom aus dem Abgastrakt 16 in den Elektrodenabgasrezirkulationskreis 14 vermieden. So wird verhindert, dass bei einem Unterdruck im Elektrodenabgasrezirkulationskreis 14 unerwünschte Stoffe aus dem Abgastrakt 16 angesaugt werden. Dies ist besonders während eines Startvorgangs von Vorteil.

Unter dem Verfahren zum Starten des Brennstoffzellensystems 10 ist dabei insbesondere das Betreiben des Brennstoffzellensystems 10 während eines Startvorgangs bzw. einer Startphase zu verstehen. Ein Startvorgang herrscht solange vor, bis sich das Brennstoffzellensystem 10 in einem Normalbetrieb befindet.

Unter einem Normalbetrieb ist der planmäßige Betrieb des Brennstoffzellensystems 10 bei üblicher Beanspruchung zu verstehen. Insbesondere ist das Brennstoffzellensystem 10 im Normalbetrieb auch in der Lage den maximal möglichen Wirkungsgrad zu erreichen.

Während eines Normalbetriebs des erfindungsgemäßen Brennstoffzellensystems 10 wird Brennstoff, beispielsweise Erdgas, über die Brennstoffleitung 68 dem Brennstoffzellensystem 10 zugeführt. Die Zufuhr des Brennstoffes wird über das Brennstoffventil 70 gesteuert bzw. dosiert. Der zugeführte Brennstoff gelangt über eine Pumpe 72 in den Reformer 56, wo er reformiert wird. Anschließend wird der reformierte Brennstoff zur Anode 20 der Brennstoffzelle 12 weitergeleitet. Dort wird er unter Erzeugung von Strom und Wärme elektrochemisch Umgesetzt.

Ferner wird der Kathode 18 über eine Zuführleitung 74 mit Hilfe einer zweiten Pumpe 76 Luft zugeführt. Die Zufuhr von Luft wird über das Ventil 78 gesteuert bzw. dosiert.

Der in der Brennstoffzelle 12 erzeugte Strom kann über einen Stromkreis 80 abgegriffen werden. Die erzeugte Wärme wiederum kann im Wesentlichen durch das in der Brennstoffzelle 12 entstehende Abgas in verschiedene Bereiche des Brennstoffzellensystems 10 transportiert und genutzt werden. So wird beispielsweise ein Teil der Wärme mit Hilfe von Wärmetauschern 82, 84 zur Vorwärmung des zugeführten Brennstoffes genutzt.

Mit Hilfe der Pumpe 72 werden die im Elektrodenabgasrezirkulationskreis 14 befindlichen Stoffe rezirkuliert. Entsprechend wird über den Elektrodenabgasrezirkulationskreis 14 zumindest ein Teil des durch die elektrochemische Umsetzung an der Anode 20 entstehenden Anodenabgases wieder dem Reformer 54 zugeführt. Ein anderer Teil des Anodenabgases wird über die Verbindungsleitung 40 in den Abgastrakt 16 geführt.

Während eines Startvorgangs des Brennstoffzellensystems 10 hingegen, werden die im Elektrodenabgasrezirkulationskreis 14 befindlichen Stoffe rezirkuliert, ohne dass über die Zuführleitung 68 Brennstoff zugeführt wird. Dadurch dass ein Stoffstrom aus dem Abgastrakt 16 in den Elektrodenabgasrezirkulationskreis 14 durch eine Rückflussverhinderungseinrichtung 38 vermieden wird, kann während des Startvorgangs kein Sauerstoff oder Kohlenstoffmonoxid aus dem Abgastrakt 16 in den Elektrodenabgasrezirkulationskreis 14 gelangen. Somit kann eine Oxidation der nickelhaltigen Anode 20 lediglich mit den im Elektrodenabgasrezirkulationskreis 14 schon befindlichen sauerstoffhaltigen Stoffen erfolgen. Sind die sauerstoffhaltigen Stoffe aufgebraucht, so stehen keine weiteren Stoffe mehr zur Verfügung, die eine Oxidation der nickelhaltigen Anode 20 herbeirufen können. Somit wird die Entstehung von schädlichen und/oder giftigen Stoffen, wie z.B. Nickeloxid und/oder Nickeltetracarbonyl, stark begrenzt.

Eine weitere Möglichkeit ist, dass während des Startvorgangs des Brennstoffzellensystems 10 dem Elektrodenabgasrezirkulationskreis 14 ein Sicherheitsstoff, beispielsweise Stickstoff, zugeführt wird. Durch den Sicherheitsstoff werden die schon im Elektrodenabgasrezirkulationskreis 14 befindlichen Stoffe verdrängt. Da ein rückläufiger Stoffstrom aus dem Abgastrakt 16 in den Elektrodenabgasrezirkulationskreis 14 durch die Rückflussverhinderungsvorrichtung 38 verhindert wird, stehen keine sauerstoffhaltigen Stoffe mehr zur Verfügung, die zu einer Oxidation der nickelhaltigen Anode 20 beitragen können. Somit wird die Entstehung von schädlichen und/oder giftigen Stoffen, wie z.B. Nickeloxid und/oder Nickeltetracarbonyl, effektiv verhindert.

Im Beispiel von Fig. 1 wird der Sicherheitsstoff durch eine Zusatzvorrichtung 48 zugeführt. Mit Hilfe einer solchen Zusatzvorrichtung 48 wird es zudem ermöglicht je nach Bedarf den Sicherheitsstoff auch optional zuzuführen.

Darüber hinaus ist es auch möglich, dass der Sicherheitsstoff portionsweise und/oder kontinuierlich zugeführt wird. So kann die Zufuhr des Sicherheitsstoffes an die Betriebsphasen des Brennstoffzellensystems 10 angepasst werden.

Der Sicherheitsstoff wird zugeführt, während dem Brennstoffzellensystem 10 kein Brennstoff zugeführt wird. Dadurch werden unerwünschte Stoffe, wie z.B. Sauerstoff und/oder Kohlenstoffmonoxid, welche während des Startvorgangs unerwünscht sind, aus dem Elektrodenabgasrezirkulationskreis 14 verdrängt, ohne dass sie durch Reformierung und/oder elektrochemische Umsetzung von Brennstoff während des Startvorgangs erneut entstehen können. Darüber hinaus wird der Verbrauch von Sicherheitsstoff reduziert.

Bei einer entsprechender Dichtheit des Systems besteht die Möglichkeit, dass der Sicherheitsstoff nur ein einziges Mal oder nur wenige Male zugeführt wird. Während eines Startvorgangs sollen insbesondere die Komponenten des Brennstoffzellensystems 10 auf eine dem Normalbetrieb entsprechenden Betriebstemperatur (ca. 800°C) erwärmt werden. Dabei wird der Sicherheitsstoff bei einer Temperatur unterhalb von 200 °C, insbesondere bei Raumtemperatur, zugeführt. Dadurch kann verhindert werden, dass sich während eines Startvorgangs unterhalb einer Temperatur von 200 °C unerwünschte Stoffe, wie z.B. Nickeloxid und/oder Nickeltetracarbonyl, bilden.

Die Erwärmung des Brennstoffzellensystems 10 auf eine dem Normalbetrieb entsprechende Betriebstemperatur wird in dem gezeigten Ausführungsbeispielen so bewerkstelligt, dass zumindest ein im Elektrodenabgasrezirkulationskreis 14 befindlicher Stoff durch eine in- und/oder am Elektrodenabgasrezirkulationskreis 14, insbesondere zwischen einem Reformer und der Brennstoffzelle, angeordnete Erwärmungseinrichtung 56 erwärmt wird. So kann ein im Elektrodenabgasrezirkulationskreis 14 befindlicher Stoff wie in Fig. 1 gezeigt durch eine elektrische Erwärmungseinheit 56, beispielsweise einen Heizdraht 58, oder wie in Fig. 3 durch einen Wärmeübertrag mit Hilfe eines Wärmetauschern 64 erwärmt werden.

Das erfindungsgemäße Verfahren zum Starten des Brennstoffzellensystems 10 kann beispielsweise so ausgeführt werden, wie es im Folgenden beschrieben ist.

Zu Beginn des Startvorgangs wird das Brennstoffventil 70 geschlossen, so dass kein Brennstoff zugeführt werden kann. Daraufhin wird die Pumpe 72 in Betrieb genommen, wodurch die im Elektrodenabgasrezirkulationskreis 14 befindlichen Stoffe rezirkuliert werden. Dabei entsteht ein Unterdruck in dem Elektrodenabgasrezirkulationskreis 14.

Um das Brennstoffzellensystem 10 auf eine dem Normalbetrieb entsprechende Betriebstemperatur zu erwärmen, wird die Erwärmungseinrichtung 56 so betrieben, dass eine Erwärmung der im Elektrodenabgasrezirkulationskreis 14 befindlichen Stoffe ermöglicht wird. In dem in Fig. 1 gezeigten Ausführungsbeispiel wird hierfür Strom an den Heizdraht 58 angelegt, während in dem in Fig. 3 gezeigten Ausführungsbeispiel über die zusätzliche Brennstoffleitung 68 dem Nachbrenner 30 zur Erzeugung von Wärme Brennstoff zugeführt wird. Die im Nachbrenner 30 erzeugte Wärme wird daraufhin mit Hilfe des Wärmetauschers 64 auf die im Elektrodenabgasrezirkulationskreis 14 befindlichen Stoffe übertragen.

Anschließend wird die Dosiereinheit 52 geöffnet, wodurch Sicherheitsstoff in den Elektrodenabgasrezirkulationskreis 14 gelangt. Durch den zugeführten Sicherheitsstoff werden die im Elektrodenabgasrezirkulationskreis 14 befindlichen, insbesondere sauerstoffhaltigen, Stoffe verdrängt, wodurch keine unerwünschten Reaktionen an der Anode 20 mehr stattfinden können. Sind die sauerstoffhaltigen Stoffe größtenteils verdrängt, so wird die Dosiereinheit 52 geschlossen, damit nicht mehr Sicherheitsstoff als nötig verbraucht wird. Das Schließen der Dosiereinheit 52 kann beispielsweise nach einer festgelegten Zeitdauer erfolgen und/oder nach einer Bestimmung bzw. Messung des Drucks im Elektodenabgasrezirkulationskreises 14 und/oder nach einer Bestimmung bzw. Messung eines Minimalwerts des Sauerstoff- und/oder Kohlenstoffmonoxidgehalts im Elektrodenabgasrezirkulationskreis 14 eingeleitet werden.

Ist eine gewünschte Temperatur, insbesondere über 200°C erreicht, ab welcher keine schädlichen und/oder giftigen Stoffe, wie z.B. Nickeloxid oder Nickeltetracarbonyl, an der Anode 20 entstehen können, so wird dem Brennstoffzellensystem 10 durch Öffnen des Brennstoffventils 70 Brennstoff zugeführt. Gleichzeitig wird durch Öffnen des Ventils 78 der Brennstoffzelle Luft zugeführt.

Durch entsprechende Regelung der Brennstoff- und/oder Luftzufuhr kann das Brennstoffzellensystem nun auf eine dem Normalbetrieb entsprechende Betriebstemperatur (von ca. 800°C) gebracht werden. Ist eine dem Normalbetrieb entsprechende Betriebstemperatur erreicht, so wird der Betrieb der Erwärmungseinrichtung eingestellt.

Alternativ kann der Betrieb der Erwärmungseinrichtung 56 zur Einsparung von Energie zu einem früheren Zeitpunkt eingestellt werden. Dies kann beispielsweise dann erfolgen, wenn durch eine Regelung der Luft- und/oder Brennstoffzufuhr eine Erwärmung des Brennstoffzellensystems 10 auch ohne Erwärmungseinrichtung 56 herbei geführt werden kann.

Alternativ kann der Sicherheitsstoff auch mehrmals und/oder kontinuierlich zugeführt werden. Dies kann beispielsweise dann sinnvoll sein, wenn die Dichtheit des Systems nicht gewährleistet werden kann.

In einem alternativen Ausführungsbeispiel, welches von den Ausführungsbeispielen in den Figuren ausgeht, kann der Sicherheitsstoff ein inertisierender Stoff sein. Darunter ist ein Stoff zu verstehen, welcher eine Inertisierung von Stoffen herbeiführt. So kann ein inertisierender Stoff eine Inertisierung eines im Elektrodenabgasrezirkulationskreis 14 befindlichen Stoffes herbeiführen und somit eine Oxidation der nickelhaltigen Anode 20 verhindern.

In einem alternativen Ausführungsbeispiel, welches von den Ausführungsbeispielen in den Figuren ausgeht, kann die Zusatzvorrichtung 48 einen Beförderungseinheit, beispielsweise eine Pumpe, aufweisen, mit dessen Hilfe eine erleichterte Zuführung von Sicherheitsstoff ermöglicht werden kann. Eine derartige Beförderungseinheit kann insbesondere ein Teil der Dosiereinheit und/oder des Behälters sein und/oder als eigenständiges Bauteil ausgeführt sein.

In einem weiteren alternativen Ausführungsbeispiel, welches von den Ausführungsbeispielen in den Figuren ausgeht, ist die Rückflussverhinderungseinrichtung 38 steuerbar. So kann beispielsweise in Abhängigkeit vom Druck und/oder Geschwindigkeitsstrom eines im Elektrodenabgasrezirkulationskreis befindlichen Stoffes die Rückflussverhinderungseinrichtung 38 so gesteuert werden, dass ein Stoffstrom aus dem Abgastrakt in den Elektrodenabgasrezirkulationskreis 14 vermieden wird.

In einem weiteren alternativen Ausführungsbeispiel, welches von den Ausführungsbeispielen in den Figuren ausgeht, kann die Erwärmungseinrichtung 56 an einer beliebigen Stelle des Elektrodenabgasrezirkulationskreises 14 angeordnet sein.

## Patentansprüche

1. Brennstoffzellensystem (10), insbesondere SOFC-Brennstoffzellensystem, aufweisend eine Brennstoffzelle (12), einen Elektrodenabgasrezirkulationskreis (14) und einen Abgastrakt, wobei der Elektrodenabgasrezirkulationskreis (14) mit dem Abgastrakt (16) verbunden ist, **dadurch gekennzeichnet, dass** ein Stoffstrom aus dem Abgastrakt (16) in den Elektrodenabgasrezirkulationskreis (14) vermeidbar ist.

2. Brennstoffzellensystem (10) nach Anspruch 1, **dadurch gekennzeichnet, dass** der Elektrodenabgasrezirkulationskreis (14) ein Anodenabgasrezirkulationskreis ist, wobei insbesondere ein im Elektrodenabgasrezirkulationskreis (14) befindlicher Stoff zumindest teilweise in den Abgastrakt (16) führbar ist.

3. Brennstoffzellensystem (10) nach einem der Ansprüche 1 oder 2, **dadurch gekennzeichnet, dass** der Stoffstrom aus dem Abgastrakt (16) in den Elektrodenabgasrezirkulationskreis (14) durch eine Rückflussverhinderungseinrichtung (38) vermeidbar ist.

4. Brennstoffzellensystem (10) nach Anspruch 3, **dadurch gekennzeichnet, dass** die Rückflussverhinderungseinrichtung (38) den Elektrodenabgasrezirkulationskreis (14) und den Abgastrakt (16) verbindend, insbesondere zwischen mindestens zwei Leitungen (24, 40), angeordnet ist.

5. Brennstoffzellensystem (10) nach Anspruch 4, **dadurch gekennzeichnet, dass** die Rückflussverhinderungseinrichtung (38) ein Rückschlagventil ist.

6. Brennstoffzellensystem (10) nach einem der Ansprüche 1 bis 5, **dadurch gekennzeichnet, dass** dem Elektrodenabgasrezirkulationskreis (14) ein Sicherheitsstoff, beispielsweise Sticksoff, zuführbar ist.

7. Brennstoffzellensystem (10) nach Anspruch 6, **dadurch gekennzeichnet, dass** der Sicherheitsstoff, durch eine Zusatzvorrichtung (48), insbesondere stromaufwärts der Brennstoffzelle (12) und/oder stromaufwärts eines Reformers (54), zuführbar ist.

8. Brennstoffzellensystem (10) nach einem der Ansprüche 1 bis 7, **dadurch gekennzeichnet, dass** eine Erwärmungseinrichtung (56) in- und/oder am Elektrodenabgasrezirkulationskreis (14), insbesondere stromaufwärts der Brennstoffzelle (12) und stromabwärts eines Reformers (54), angeordnet ist.

9. Verfahren zum Starten eines Brennstoffzellensystems (10), insbesondere eines Brennstoffzellensystems (10) nach einem der vorangehenden Ansprüche, aufweisend eine Brennstoffzelle (12), einen Elektrodenabgasrezirkulationskreis (14) und einen Abgastrakt (16), wobei der Elektrodenabgasrezirkulationskreis (14) mit dem Abgastrakt (16) verbunden ist, **dadurch gekennzeichnet, dass** ein Stoffstrom aus dem Abgastrakt (16) in den Elektrodenabgasrezirkulationskreis (14) vermieden wird.

10. Verfahren zum Starten eines Brennstoffzellensystems (10) nach Anspruch 9, **dadurch gekennzeichnet, dass** der Stoffstrom aus dem Abgastrakt (16) in den Elektrodenabgasrezirkulationskreis (14) durch eine Rückflussverhinderungseinrichtung (38) vermieden wird.

11. Verfahren zum Starten eines Brennstoffzellensystems (10) nach einem der Ansprüche 9 und 10, **dadurch gekennzeichnet, dass** dem Elektrodenabgasrezirkulationskreis (14) ein Sicherheitsstoff, beispielsweise Stickstoff, zugeführt wird.

12. Verfahren zum Starten eines Brennstoffzellensystems (10) nach Anspruch 11, **dadurch gekennzeichnet, dass** der Sicherheitsstoff zugeführt wird, während dem Brennstoffzellensystem (10) kein Brennstoff zugeführt wird.

13. Verfahren zum Starten eines Brennstoffzellensystems (10) nach einem der Ansprüche 11 oder 12, **dadurch gekennzeichnet, dass** der Sicherheitsstoff nur ein einziges Mal oder nur wenige Male zugeführt wird.

14. Verfahren zum Starten eines Brennstoffzellensystems (10) nach einem der Ansprüche 11 bis 13, **dadurch gekennzeichnet, dass** der Sicherheitsstoff bei einer Temperatur unter 200 °C, insbesondere bei Raumtemperatur, zugeführt wird.

15. Verfahren zum Starten eines Brennstoffzellensystems (10) nach einem der Ansprüche 9 bis 14, **dadurch gekennzeichnet, dass** zumindest ein im Elektrodenabgasrezirkulationskreis (14) befindlicher Stoff durch eine in- und/oder am Elektrodenabgasrezirkulationskreis (14), insbesondere zwischen einem Reformer (54) und der Brennstoffzelle (12), angeordnete Erwärmungseinrichtung (56) erwärmt wird.
